# EUROPEAN PATENT APPLICATION

(11) **EP 4 606 873 A1**
(43) Date of publication of application: **27.08.2025**
(21) Application number: 25157498.4
(22) Date of filing: 12.02.2025
(51) Int. Cl.: C09D 11/54, C09D 11/38, C09D 11/104, C09D 11/40, C09D 11/322

(54) **PRINTING METHOD, PRINTER AND INK SET**

(30) Priority: 22.02.2024 EP 24159235
(71) Applicant: Canon Production Printing Holding B.V., 5914 HH Venlo (NL)
(72) Inventor: MARKIES, Peter R., 5914 HH Venlo (NL); SUILEN, Frederik L.E.M., 5914 HH Venlo (NL); TURKENBURG, Daniël H., 5914HH Venlo (NL); VAN DIJKMAN, Thomas F., 5914 HH Venlo (NL); VAN KEULEN, Luc, 5914 HH Venlo (NL)
(74) Representative: Canon Production Printing IP Department

(57) **Abstract**

The invention relates to a method for applying an image onto a recording medium, including applying a pretreatment liquid comprising Zn²⁺ salt and ink composition comprising a water-dispersible polyester resin. The invention further relates to a printing apparatus. The invention also relates to an ink set and a method for preparing said ink set.

## Description

The invention relates to a method for applying an image onto a recording medium. The invention further relates to a printing apparatus. The invention also relates to an ink set and a method for preparing said ink set.

### Background of the invention

Printing methods using latex inks are known in the art. Latex inks are aqueous inks comprising a latex, i.e. a water dispersible resin. The latex inks may be applied onto the recording medium using a suitable printing technique, preferably ink-jet printing. Examples of water-dispersed or water-dispersible resin used in latex inks include acrylate resin, styrene-acrylate resins and polyester resins.

To improve the print quality of prints made using latex inks, often a pretreatment-liquid, also known as primer, is applied. The primer may be applied onto the recording medium before application of the latex ink. After the primer composition has been applied, the latex ink may be applied. Subsequently, the image formed may be dried to remove water and optional other solvents and to fix the image onto the recording medium. Pre-treatment liquids usually comprise an acid or a salt, preferably a salt of a multivalent (i.e., divalent, trivalent, or tetravalent) metal, such as magnesium or calcium. The salts (or acids) in the primer may destabilize the dispersed particles in the ink, such as the resin and optionally a colorant, which may result in better image quality.

However, often use of a primer containing a salt of a multivalent metal may result in insufficient film formation of the ink after being applied onto the recording medium. This is an unwanted phenomenon, as incomplete film formation may result in poor print quality.

It is therefore an object of the invention to provide a print method, which results in improved film formation. It is a further object of the invention to provide an ink set comprising an aqueous pretreatment liquid and at least one aqueous ink composition that show improved film formation when applied onto a recording medium.

### Summary of the invention

The object of the invention is achieved in a method for applying an image onto a recording medium, the method comprising the steps of :
a. Applying an aqueous pretreatment liquid onto the recording medium, the aqueous pretreatment liquid comprises a Zn²⁺ salt;
b. Applying at least one aqueous ink composition onto the recording medium, the at least one aqueous ink comprising a colorant and a water-dispersible polyester resin;
c. Drying the recording medium.

A method for applying an image onto a recording medium may also be referred to as a printing method. The method may be performed using a printing apparatus. A printing apparatus is also referred to as printer. The printer may be configured to in printing operation apply an aqueous pretreatment liquid and an aqueous ink. Preferably, the printer may be an inkjet printer, configured to apply ink onto the recording medium by jetting droplets of ink onto the recording medium in a predetermined pattern to form an image.

Suitable recording media for use in a printing process using an ink or set of inks (e.g. Cyan, Magenta, Yellow and blacK, CMYK) according to the present invention are not particularly limited to any type. Recording medium is also known as receiving medium or substrate. The receiving medium may be suitably selected depending on the intended application.

Suitable receiving media may range from strongly water absorbing media such as plain paper to non-water-absorbing media such as plastic sheets (for example PE, PP, PVC, PET films and Machine Coated (MC) media). To optimize print quality, inkjet coated media are known, which media comprise a highly water absorbing coating.

In the method according to the present invention, is step a, an aqueous pretreatment liquid is applied onto the recording medium, the aqueous pretreatment liquid comprises a Zn²⁺ salt.

The primer according to the present invention is an aqueous (i.e. water-based) composition comprising a Zn²⁺ salt. The primer composition may further comprise a co-solvent. Co-solvents are further explained below.

Preferably, the Zn²⁺ salt has a high solubility in water. Non-limiting examples of zinc salts suitable for use in an aqueous pretreatment liquid include zinc acetate, zinc nitrate and zinc sulfate, zinc citrate, zinc glycerate, zinc propionate, zinc maleate, zinc malate, zinc succinate and zinc formate.

The solubility of a Zn²⁺ salt may be pH dependent. Hence, a suitable Zn²⁺ salt may be selected taking into account the pH of the pretreatment solution.

Preferably, the salt may not be one of a fluoride, chloride, bromide or iodide salt, if the primer composition is applied using an inkjet print head. These types of salt, comprising halogen anions, tend to corrode the print head. Therefore, the primer composition preferably has low content of, or is even free from, such anions.

It was surprisingly found that use of a primer comprising a Zn²⁺ salt in combination with an ink comprising a water-dispersible polyester resin, results in good film formation. Good film formation may result in good print quality.

The pretreatment liquid may comprise further components, such as one or more solvents or co-solvents, one or more surfactants and one or more biocides.

The pretreatment liquid may be applied onto the recording medium using a pretreatment liquid application unit. Examples of such application units are a roller coating, an ink-jet application, a curtain coating and a spray coating. The pretreatment liquid may be applied evenly over the surface of the recording medium. Alternatively, the pretreatment liquid may be applied image wise.

In the method according to the present invention, in step b, at least one aqueous ink composition is applied onto the recording medium, the at least one aqueous ink composition comprising a water-dispersible polyester resin.

The ink composition may be applied onto the recording medium using an ink applicator, such as an inkjet print head. Non-limiting examples of an inkjet print head are a piezo inkjet print head and a thermal inkjet print head.

The aqueous ink composition used in the ink in the present method is not particularly limited and can e.g. comprise a water-dispersible resin, a water-dispersible colorant, water, a surfactant and optionally other additives. Preferably, the ink is water-based. In the ink, the amount of each component is not particularly limited as long as a printing ink is obtained.

### Water-dispersible resin (Latex resin)

The ink according to the present invention may comprise a water-dispersible polyester resin. The water-dispersible resin may be used in the form of a homopolymer, a copolymer or a composite resin, and all of water-dispersible resins having a monophase structure or core-shell structure and those prepared by power-feed emulsion polymerization may be used. The water-dispersed resin may be dispersed in the ink composition. The water-dispersed resin may be dispersed using suitable dispersants. Optionally, the water-dispersible resin may be a self-dispersible resin.

Optionally, the ink composition may comprise a further water-dispersible resin. Examples of such water-dispersible resins include synthetic resins and natural polymer compounds. Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins. Examples of the natural polymer compounds include celluloses, rosins, and natural rubbers.

The further water-dispersible resin may preferably be present in an amount not greater than the amount of water-dispersible polyester resin.

### Colorant

The ink may further comprise a colorant. The colorant may be a pigment, a dye or a combination of a pigment and a dye. Optionally, the ink may comprise a combination of one or more pigments and/or one or more dyes. Preferably the colorant is a pigment. The colorant may be a water-dispersible colorant, such as a water-dispersible pigment. The pigment is not particularly limited and may be suitably selected in accordance with the intended use.

### Solvent

Water is cited as an environmentally friendly and hence desirable solvent.

### Surfactants

It is preferable that the ink contains at least one surfactant in order to improve an ink ejection property and/or the wettability of the surface of a recording medium, and the image density and color saturation of the image formed and reducing white spots therein. Using surfactants, the surface tension, i.e. the dynamic surface tension as well as the static surface tension, can be adjusted.

Examples of surfactants are not specifically limited. Examples of the surfactant include nonionic surfactants, cationic surfactants, anionic surfactants, amphoteric surfactants, in particular betaine surfactants, silicone surfactants, and fluoro-surfactants. These surfactants may be used solely, or they may be used in combination.

### Additives

The ink composition may optionally further contain additives like biocides or a penetrant, which is a compound that promotes absorption of the ink composition in the print medium. The additives are not particularly limited and comprise those usually used in inks. Such additives may also be present in the primer composition.

In the method according to the present invention, is step c, the recording medium is dried. Drying may be done in between applying an aqueous primer and applying the ink, or may be done after applying the ink. Alternatively, more than one drying step may be performed in the method. By drying the recording medium, water and optional solvents may be removed.

It was surprisingly found that using an aqueous pretreatment liquid comprising a Zn²⁺ salt and at least one aqueous ink composition comprising a water-dispersible polyester resin may result in good film formation after drying the ink. Good film formation may beneficially influence the image robustness.

In an embodiment, the Zn²⁺ salt is present in a concentration of from 1,0 mmol/L to 1.95 mol/L. In an embodiment, the Zn²⁺ salt is present in a concentration of from 0.1 mol/L to 1.8 mol/L. In a further embodiment, the Zn²⁺ salt is present in a concentration of from 0.3 mol/L to 1.6 mol/L. Preferably, the Zn²⁺ salt is present in a concentration of from 0.5 mol/L to 1.5 mol/L, such as from 0.6 mol/L to 1.0 mol/L.

If the concentration of the Zn²⁺ salt is too low, such as lower than 1.0 mmol/L, no precipitation of the water-dispersed polyester resin may take place when the ink composition comes into contact with the pretreatment liquid. If the concentration of the Zn²⁺ salt is too high, such as higher than 1.95 mol/L, then the salt may not completely dissolve, which may hamper the application of the pretreatment liquid onto the recording medium.

In an embodiment, the Zn²⁺ salt is zinc acetate. Zinc acetate is relatively cheap and is well soluble in water, provided the pH of the pretreatment liquid is not too high. Hence, zinc acetate may be suitably used as a Zn²⁺ salt for preparing a pretreatment liquid in accordance with the present invention.

In an embodiment, the colorant is a water-dispersible pigment.

Examples of the pigment usable include those commonly known without any limitation, and either a water-dispersible pigment or an oil-dispersible pigment is usable. For example, an organic pigment such as an insoluble pigment or a lake pigment, as well as an inorganic pigment such as carbon black, is preferably usable.

In an embodiment, the at least one ink further comprises a co-solvent.

As a co-solvent of the ink and/or the primer, for the purposes of improving the ejection property of the ink/primer or adjusting physical properties of the ink/primer, the ink/primer preferably contains a water soluble organic solvent in addition to water. As long as the effect of the present invention is not damaged, there is no restriction in particular in the type of the water soluble organic solvent. Also, more than one co-solvent can be used in the ink/primer used in the present invention.

Examples of the water-soluble organic solvent include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of the solvent include: glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, pentaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglycerol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.

In an embodiment, drying of the ink is performed by heating the recording medium provided with the ink.

Drying may be done by applying heat to the recording medium and/or refreshing air around the recording medium. Applying heat may be done using a radiation heater, for example an IR heater. Alternatively and/or additionally the recording medium may be passed over a heated plate. Refreshing air around the recording medium may be done by blowing air over the recording medium. Optionally, the air may be at elevated temperature to increase the rate of evaporation of water and optional additional solvents.

In an aspect of the invention, a printing apparatus is provided, the printing apparatus, the printing apparatus comprising:
a. An pretreatment liquid application unit for applying a pretreatment liquid;
b. An ink applicator for applying the at least one ink;
c. A medium support for holding the recording medium;
d. A drying unit for drying the recording medium;
e. A control unit for controlling the printing apparatus to perform the method according to the present invention.

The printing apparatus is thus configured to perform the method according to the present invention. Printing apparatus may also be referred to as printer.

In an embodiment, the ink applicator comprises at least one page-wide inkjet print head array.

The page-wide inkjet print head array may have a width that is at least equal to the width of a recording medium. The page-wide inkjet print head array may comprise one page-wide inkjet print head. Alternatively, the page-wide inkjet print head array may comprise a plurality of page-wide inkjet print heads.

Optionally, the ink applicator comprises a plurality of page-wide inkjet print head arrays. Optionally, each one of the plurality of page-wide inkjet print head arrays may be configured to print an ink having a specific color on the recording medium. By having a plurality of page-wide inkjet print head arrays, each one of the plurality of page-wide inkjet print head arrays configured to print an ink having a specific color on the recording medium, a multi-color image may be provided on a recording medium in a single pass printing process. An advantage of a single pass print process, in comparison to a scanning print process, is improved printing speed.

In an aspect of the invention, an ink set is provided, the ink set comprising an aqueous pretreatment liquid and at least one aqueous ink composition comprising a colorant and a resin, wherein the aqueous pretreatment liquid comprises a Zn²⁺ salt and the resin is a water-dispersible polyester resin.

The ink set is suitable for use in a method according to the present invention.

In an embodiment, the ink set comprises at least four aqueous ink compositions, each one of the at least four aqueous ink compositions comprising a colorant and a water-dispersible polyester resin.

Preferably, each one of the at least four aqueous ink compositions comprises a different type and/or different amount of colorant. Preferably, the at least four aqueous ink compositions may comprise a cyan ink composition, a magenta ink composition, a yellow ink composition and a black ink composition. Optionally, the ink set may comprise more ink compositions, such as one or more of a white ink composition, a grey ink composition, a light magenta, ink composition, a light cyan ink composition, a red ink composition, a green ink composition, a blue ink composition, an orange ink composition, a purple ink composition, a brown ink composition and a metallic ink composition.

In an aspect of the invention, a method for preparing an ink set is provided, the method including the steps of:
a. Preparing a pretreatment liquid by:
   i. Proving a Zn²⁺ salt;
   ii. Providing an aqueous medium;
   iii. Mixing the Zn²⁺ salt and the aqueous medium
b. Preparing an ink composition by:
   i. Providing a water-dispersible polyester resin
   ii. Providing the colorant;
   iii. Providing an aqueous ink medium;
   iv. Mixing the polyester resin, the colorant and the aqueous ink medium;
c. Combing the pretreatment liquid and the ink composition into an ink set. Using the method for preparing an ink set, an ink set comprising a pretreatment liquid and an ink composition can be prepared, which can be suitably used in the method according to the present invention.

### Brief Description of the Drawings

The present invention will become more fully understood from the detailed description given herein below and accompanying schematical drawings which are given by way of illustration only and are not limitative of the invention, and wherein:
Fig. 1 shows a schematic representations of an inkjet printing system.
Fig. 2 shows a schematic representation of an inkjet marking device: A) and B) assembly of inkjet heads; C) detailed view of a part of the assembly of inkjet heads.

### Printing process

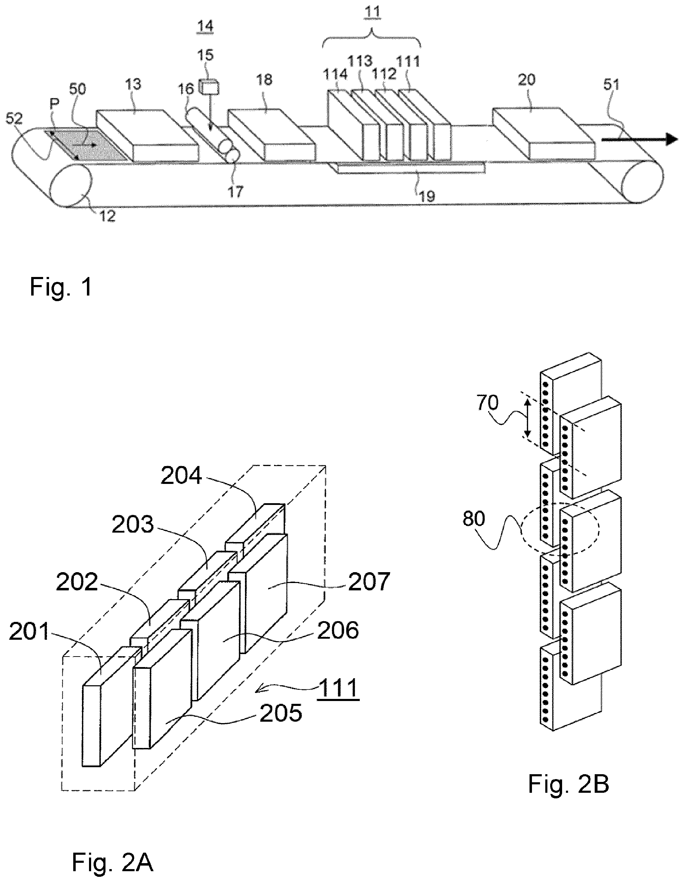

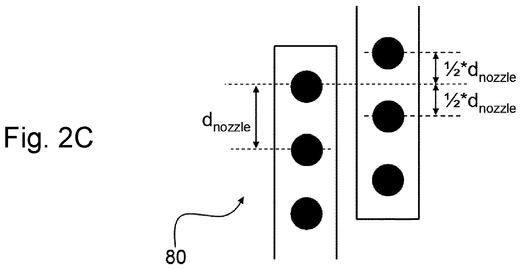

A printing process in which the inks according to the present invention may be suitably used is described with reference to the appended drawings shown in Fig. 1 and Fig. 2. Figs. 1 and 2 show schematic representations of an inkjet printing system and inkjet marking device, respectively.

Fig. 1 shows that a sheet of a receiving medium, in particular a machine coated or offset coated medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pre-treatment, image formation, drying and fixing and optionally post treatment.

### Media pre-treatment

To improve the spreading and pinning (i.e. fixation of colorants and water-dispersed resin particles) of the ink on the receiving medium, in particular on slow absorbing media, such as machine coated or offset coated media, the receiving medium may be pretreated, i.e. treated prior to printing an image on the medium. The pre-treatment step may comprise one or more of the following:
- preheating of the receiving medium to enhance spreading of the used ink on the receiving medium and/or to enhance absorption of the used ink into the receiving medium;
- primer pre-treatment for increasing the surface tension of receiving medium in order to improve the wettability of the receiving medium by the used ink and to control the stability of the dispersed solid fraction of the ink composition (i.e. pigments and dispersed resin particles). Primer pre-treatment may be performed in the gas phase, e.g. with gaseous acids such as hydrochloric acid, sulfuric acid, acetic acid, phosphoric acid and lactic acid, or in the liquid phase by coating the receiving medium with a pre-treatment liquid. The pre-treatment liquid may comprise water as a solvent, one or more cosolvents, additives such as surfactants and at least one compound selected from a Zn2+ salt (discussed in detail above);
- corona or plasma treatment.

### Primer pre-treatment

As an application way of the pre-treatment liquid, any conventionally known methods can be used. Specific examples of an application way include: a roller coating, an ink-jet application, a curtain coating and a spray coating. There is no specific restriction in the number of times with which the pre-treatment liquid is applied. It may be applied at one time, or it may be applied in two times or more. Application in two times or more may be preferable, since cockling of the coated printing paper can be prevented and the film formed by the surface pre-treatment liquid will produce a uniform dry surface having no wrinkle by applying in 2 steps or more.

Especially a roller coating (see 14 in Fig. 1) method is preferable because this coating method does not need to take into consideration of ejection properties and it can apply the aqueous pre-treatment liquid homogeneously to a recording medium. In addition, the amount of the applied pre-treatment liquid with a roller or with other means to a recording medium can be suitably adjusted by controlling: the physical properties of the pre-treatment liquid; and the contact pressure of a roller in a roller coater to the recording medium and the rotational speed of a roller in a roller coater which is used for a coater of the pre-treatment liquid. As an application area of the pre-treatment liquid, it may be possible to apply only to the printed portion, or to the entire surface of both the printed portion and the non-printed portion. However, when the pre-treatment liquid is applied only to the printed portion, unevenness may occur between the application area and a non-application area caused by swelling of cellulose contained in the coated printing paper with the water in the pre-treatment liquid followed by drying. Then, from the viewpoint of drying uniformly, it is preferable to apply a pre-treatment liquid to the entire surface of a coated printing paper, and roller coating can be preferably used as a coating method to the whole surface.

### Corona or plasma treatment

Corona or plasma treatment may be used as a pre-treatment step by exposing a sheet of a receiving medium to corona discharge or plasma treatment. In particular when used on media like polyethylene (PE) films, polypropylene (PP) films,
polyethyleneterephtalate (PET) films and machine coated or offset coated media, the adhesion and spreading of the ink can be improved by increasing the surface energy of the media. With machine coated or offset coated media, the absorption of water can be promoted which may induce faster fixation of the image and less puddling on the receiving medium. Surface properties of the receiving medium may be tuned by using different gases or gas mixtures as medium in the corona or plasma treatment. Examples are air, oxygen, nitrogen, carbon dioxide, methane, fluorine gas, argon, neon and mixtures thereof. Corona treatment in air is most preferred.

Fig. 1 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Optionally and subsequently, a predetermined quantity of the aqueous pre-treatment liquid is applied on the surface of the receiving medium P at aqueous pre-treatment liquid applying member 14. Specifically, the aqueous pre-treatment liquid is provided from storage tank 15 of the aqueous pre-treatment liquid to the aqueous pre-treatment liquid applying member 14 composed of double rolls 16 and 17. Each surface of the double rolls may be covered with a porous resin material such as a sponge. After providing the aqueous pre-treatment liquid to auxiliary roll 16 first, the aqueous pre-treatment liquid is transferred to main roll 17, and a predetermined quantity is applied on the surface of the receiving medium P. Subsequently, the coated printing paper P on which the aqueous pre-treatment liquid was supplied may optionally be heated and dried by drying member 18 which is composed of a drying heater installed at the downstream position of the aqueous pre-treatment liquid applying member 14 in order to decrease the quantity of the water content in the aqueous pre-treatment liquid to a predetermined range. It is preferable to decrease the water content in an amount of 1.0 weight% to 30 weight% based on the total water content in the provided pre-treatment liquid provided on the receiving medium P.

To prevent the transportation mechanism 12 being contaminated with pre-treatment liquid, a cleaning unit (not shown) may be installed and/or the transportation mechanism may be comprised multiple belts or drums as described above. The latter measure prevents contamination of the upstream parts of the transportation mechanism, in particular of the transportation mechanism in the printing region.

### Image formation

Image formation is performed in such a manner that, employing an inkjet printer loaded with inkjet inks, ink droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single printhead having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of printheads. Fig. 2A shows an inkjet marking device111 (112, 113, 114 may be identical) comprising 7 individual inkjet heads (201, 202, 203, 204, 205, 206, 207) which are arranged in two parallel rows, a first row comprising four inkjet heads (201 - 204) and a second row comprising three inkjet heads (205 - 207) which are arranged in a staggered configuration with respect to the inkjet heads of the first row. The staggered arrangement provides a page wide array of nozzles which are substantially equidistant in the length direction of the inkjet marking device. The staggered configuration may also provide a redundancy of nozzles in the area where the inkjet heads of the first row and the second row overlap, see 70 in Fig. 2B. Staggering may further be used to decrease the nozzle pitch (hence increasing the print resolution) in the length direction of the inkjet marking device, e.g. by arranging the second row of inkjet heads such that the positions of the nozzles of the inkjet heads of the second row are shifted in the length direction of the inkjet marking device by half the nozzle pitch, the nozzle pitch being the distance between adjacent nozzles in an inkjet head, d_{nozzle} (see Fig. 2C, which represents a detailed view of 80 in Fig. 2B). The resolution may be further increased by using more rows of inkjet heads, each of which are arranged such that the positions of the nozzles of each row are shifted in the length direction with respect to the positions of the nozzles of all other rows.

In image formation by ejecting an ink, an inkjet head (i.e. printhead) employed may be either an on-demand type or a continuous type inkjet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 µm or less in the current image forming method.

Fig. 1 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 30°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the down stream part of the inkjet marking module 11.

### Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus and may comprise a belt or a drum.

### Post treatment

To increase the print robustness or other properties of a print, such as gloss level, the print may be post treated, which is an optional step in the printing process.

In an embodiment, the prints may be post treated by laminating the prints.

In an embodiment, the post-treatment step comprises a step of applying (e.g. by jetting) a post-treatment liquid onto the surface of the coating layer, onto which the inkjet ink has been applied, so as to form a transparent protective layer on the printed recording medium. In the post-treatment step, the post-treatment liquid may be applied over the entire surface of an image on the recording medium or may be applied only to specific portions of the surface of an image. The method of applying the post-treatment liquid is not particularly limited, and is selected from various methods depending on the type of the post-treatment liquid. However, the same method as used in the coating method of the pre-treatment liquid or an inkjet printing method is preferably used. Of these methods, inkjet printing method is particularly preferable in view of, avoiding contact between the printed image and the used post-treatment liquid applicator; the construction of an inkjet recording apparatus used; and the storage stability of the post-treatment liquid. In the post-treatment step, a post-treatment liquid containing a transparent resin is applied on the surface of a formed image so that a dry adhesion amount of the post-treatment liquid is 0.5 g/m² to 10 g/m², preferably 2 g/m² to 8 g/m², thereby forming a protective layer on the recording medium. When the dry adhesion amount is less than 0.5 g/m², almost no improvement in image quality (image density, color saturation, glossiness and fixability) is obtained. When the dry adhesion amount is more than 10 g/m², it is disadvantageous in cost efficiency, because the dryness of the protective layer degrades and the effect of improving the image quality is saturated.

As a post-treatment liquid, an aqueous solution comprising components capable of forming a transparent protective layer over a recording medium (e.g. a water-dispersible resin, a surfactant, water, and additives as required) is preferably used. The water-dispersible resin comprised in the post-treatment liquid, preferably has a glass transition temperature (T_{g}) of -30°C or higher, and more preferably in the range of -20°C to 100°C. The minimum film forming temperature (MFFT) of the water-dispersible resin is preferably 50°C or lower, and more preferably 35°C or lower. The water-dispersible resin may be radiation curable to improve the glossiness and fixability of the image.

As the water-dispersible resin, for example, an acrylic resin, a styrene-acrylic resin, a urethane resin, an acryl-silicone resin, a fluorine resin and the like are preferably used. The water-dispersible resin can be suitably selected from the same materials as that used for the inkjet ink. The amount of the water-dispersible resin contained, as a solid content, in the protective layer is preferably 1% by mass to 50% by mass.

The surfactant comprised in the post-treatment liquid is not particularly limited and may be suitably selected from those used in the inkjet ink. Examples of the other components of the post-treatment liquid include antifungal agents, antifoaming agents, and pH adjustors.

Hitherto, the printing process was described such that the image formation step was performed in-line with the pre-treatment step (e.g. application of an (aqueous) pre-treatment liquid) and a drying and fixing step, all performed by the same apparatus (see Fig. 1). However, the printing process is not restricted to the above-mentioned embodiment. A method in which two or more machines are connected through a belt conveyor, drum conveyor or a roller, and the step of applying an aqueous pre-treatment liquid, the (optional) step of drying a coating solution, the step of ejecting an inkjet ink to form an image and the step or drying an fixing the printed image are performed. It is, however, preferable to carry out image formation with the above defined in-line image forming method.

### Experiments and examples

### Materials

Magnesium acetate, zinc acetate dihydrate, 1,4-cyclohexanedicarboxylic acid, 1,4-cyclohexanedimethanol, isophthalic acid and titanium (IV) n-butoxide were obtained from Merck. All materials were used as obtained, unless stated otherwise.

### Methods

### Precipitation Experiment

A droplet of a polyester dispersion was added to a pretreatment liquid. It was visually observed whether precipitation took place. If the pretreatment liquid remained a clear solution upon addition of the polyester dispersion, no precipitation took place. If the pretreatment became cloudy, locally or in its entirety, precipitation did take place.

### Film Forming Experiment

5 grams of polymer dispersion PD (see below) was added to 10 grams of a pretreatment solution. The resulting precipitation was collected in an aluminum cup. The aluminum cup with precipitated latex was placed on a hotplate set at 200°C and decanted after which they are placed back onto the hotplate to dry. At this point the precipitates appear opaque and irregular. The dried precipitates are placed in an oven for 2 hours (simultaneously) at 220°C under vacuum to remove trapped air. Afterwards, the film formation was analyzed by observing the wetting of the aluminum cup. The larger the area of the cup bottom surface covered by precipitated latex, the more complete the film formation was. More complete film formation corresponds to better film formation.

### Determination of acid number

A dilute solution of polyester (1g) in THF (20g) is prepared. After complete dissolution, water is added (2g) together with a phenolphthalein (1 mg). For the titration, a 47% w/w solution of KOH in water is diluted with ethanol until the KOH concentration becomes 0.5% (w/w) which corresponds to 5mg KOH per gram of solution. The solution of KOH and water in ethanol is added dropwise to the solution of polymer in THF until the colorless mixture starts to switch to magenta. If 4 grams of titration solution would be needed to be added to establish the change of color, the corresponding acid number of that particular polymer batch would be 20 mg_{KOH}/g_{polymer}.

### Molecular Weight (M_{N})

The Molecular weight (Mₙ) of the polyester was determined using size-exclusion chromatography (SEC).

### Experiment 1

### Production of pretreatment solution A (A1 and A2))

A first pretreatment solution was prepared by adding 14.2 mg of (0.1 mmol) of magnesium acetate to 1 liter of water. This yielded pretreatment solution A1.

A second pretreatment solution was prepared by adding 1,42 g of (10 mmol) of magnesium acetate to 1 liter of water. This yielded pretreatment solution A2.

### Production of pretreatment solution B (B1 and B2))

A first pretreatment solution was prepared by adding 20.2 mg of (0.1 mmol) of zinc acetate dihydrate to 1 liter of water. This yielded pretreatment solution B1.

A second pretreatment solution was prepared by adding 2,02 g of (10 mmol) of zinc acetate dihydrate to 1 liter of water. This yielded pretreatment solution B2.

### Production of Polyester Resin P

To a round-bottom, three-necked reaction flask, 172.2 grams (1.00 mole) of 1,4-cyclohexanedicarboxylic acid and 147.1 grams (1.02 mole) of 1,4-cyclohexanedimethanol was added. The mixture was heated to a temperature of 170°C in an inert nitrogen atmosphere until the entire crystalline diacid fraction has dissolved into the molten diol fraction. Mechanical stirring was initiated and titanium (IV) n-butoxide (~0,2mL) was added as a catalyst. Subsequently the pressure was reduced, and water was removed (evaporation and condensation) as the reaction progressed.

In the early phase of the reaction a relatively large amount of water is produced. This water was removed. Over the course of the reaction, pressure was further reduced until the pressure was in the range of 10⁻¹ to 10⁻² mbar. Further, over the course of the reaction, the temperature was increased to ~250°C.

When the reaction was terminated, the polymer was poured from the reactor into a Teflon covered tray and was allowed to cool down to room temperature, yielding a colorless, glasslike material. After solidification, the polymer was crushed with a hammer and stored at ambient conditions.

The resulting polyester had an acid number of 8mg KOH/g and a M_{N} of 4741 Da.

### Production of Polyester Dispersion PD

In a first vessel, 200g of a 20% (w/w) solution of polymer P in methylethylketone (MEK) was placed. In a second vessel, 0.27 gram of KOH was dissolved in 0.27 gram of water. 12.9 Gram of ethanol was added to the aqueous KOH solution. The resulting KOH/water/ethanol mixture was added to the polymer solution; the mixture became slightly turbid but remained stable. The stirrer (ultraturrax) was switched on (at a rotation speed of 24 k rpm) and 800g of water was injected directly below the rotating blade at constant rate of 480ml/min using a membrane pump. The moment of phase inversion is marked by temporary increase in viscosity, a permanent change in the appearance from mildly turbid to completely opaque and a sharp rise in the electric conductivity.

Latices obtained by means of the phase inversion emulsification process were stripped from remaining solvents by heating them for ~6 hours at 95°C while stirring and while supplying a stream of dry nitrogen. Prolongation of the solvent removal step lead to evaporative loss of water which makes the dispersion more concentrated. The latex was stripped until the solid content was 24% (w/w).

### Comparison Experiment 1: Precipitation Experiment

Precipitation experiments were performed. The results are summarized in table 1.

**Table 1: precipitation Experiments**

| Experiment | Pretreatment liquid | Polyester dispersion | Precipitation? |
|---|---|---|---|
| **CE-1a** | **A1** | **PD** | No |
| **CE-1b** | **A2** | **PD** | Yes |
| **Ex-1a** | **B1** | **PD** | No |
| **Ex-1b** | **B2** | **PD** | yes |

When adding the polyester dispersion to pretreatment liquids A2 and B2, precipitation took place. Pretreatment liquids A2 and B2 have a salt concentration of 10 mmol/L. When adding the polyester dispersion to pretreatment liquids A1 and B1, pretreatment liquids A1 and B1 having a salt concentration of 0.1 mmol/L, no precipitation took place. Pretreatment liquids comprising a Zn²⁺ salt hence yielded similar results in the precipitation experiment compared to pretreatment liquids comprising a Mg²⁺ salt. Pretreatment liquids comprising a Mg²⁺ salt are well known in the art. Pretreatment liquids comprising a Zn²⁺ salt are hence also suitable for use as a primer.

### Comparison Experiment 1: Film Formation Experiment

Film formation experiments were performed. The results are summarized in table 2.

**Table 2: Film formation experiments**

| Experiment | Pretreatment liquid | Polyester dispersion | Film Formation |
|---|---|---|---|
| **CE-2** | **A2** | **P** | Incomplete |
| **Ex-2** | **B2** | **P** | Nearly complete |

The viscosity of the magnesium precipitated polyester **(CE-2,** an example not according to the invention) did not become low enough to fully wet the bottom surface of the aluminum cup. Hence, this resulted in incomplete film formation. The zinc precipitated polyester **(Ex-2,** an example according to the invention), on the other hand, became fluid enough to form a homogeneous layer thickness over nearly the entire bottom surface of the aluminum cup. Hence, this resulted in nearly complete film formation. The example according to the invention thus gave better results with regard to film formation than the example not according to the present invention.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

## Claims

1. Method for applying an image onto a recording medium, the method comprising the steps of :
a. applying an aqueous pretreatment liquid onto the recording medium, the aqueous pretreatment liquid comprises a Zn²⁺ salt ;
b. applying at least one aqueous ink composition onto the recording medium, the at least one aqueous ink comprising a colorant and a water-dispersible polyester resin;
c. drying the recording medium.

2. Method according to claim 1, wherein the Zn²⁺ salt is present in a concentration of from 1,0 mmol/L to 1.95 mol/L.

3. Method according to claim 1 or 2, wherein the Zn²⁺ salt is zinc acetate.

4. Method according to any of the preceding claims, wherein the at least one ink further comprises a water-dispersible pigment.

5. Method according to any of the preceding claims, wherein the at least one ink further comprises a co-solvent.

6. Method according to any of the preceding claims, wherein drying of the ink is performed by heating the recording medium provided with the ink.

7. Printing apparatus, the printing apparatus comprising:
a. an pretreatment liquid application unit for applying a pretreatment liquid;
b. an ink applicator for applying the at least one ink;
c. a medium support for holding the recording medium;
d. a drying unit for drying the recording medium;
e. a control unit for controlling the printing apparatus to perform the method according to any of the claims 1-6.

8. Printing apparatus according to claim 7, wherein the ink applicator comprises at least one page-wide inkjet print head array.

9. Ink set comprising an aqueous pretreatment liquid and at least one aqueous ink composition comprising a colorant and a resin, wherein the aqueous pretreatment liquid comprises a Zn²⁺ salt and the resin is a water-dispersible polyester resin.

10. Ink set according to claim 9, wherein the ink set comprises at least four aqueous ink compositions, each one of the at least four aqueous ink compositions comprising a colorant and a water-dispersible polyester resin.

11. Method for preparing an ink set, the method including the steps of:
a. Preparing a pretreatment liquid by:
i. providing a Zn²⁺ salt;
ii. providing an aqueous medium;
iii. mixing the Zn²⁺ salt and the aqueous medium
b. Preparing an ink composition by:
i. providing a water-dispersible polyester resin
ii. providing a colorant;
iii. providing an aqueous ink medium;
iv. mixing the polyester resin, the colorant and the aqueous ink medium;
c. combing the pretreatment liquid and the ink composition into an ink set.
